# FASCICULE DE BREVET EUROPEEN

(11) **EP 0 473 482 B1**
(45) Date de publication et mention de la délivrance du brevet: **25.10.1995**
(21) Numéro de dépôt: 91402177.9
(22) Date de dépôt: 02.08.1991
(51) Int. Cl.: H02G 3/12, H01R 25/16

(54) **Boîte de montage pour appareil électrique**
Befestigungsgehäuse für elektrisches Gerät
Mounting box for electrical apparatus

(30) Priorité: 30.08.1990 FR 9010807
(43) Date de publication de la demande: 04.03.1992
(73) Titulaire: PLANET-WATTOHM, 60300 Senlis (FR)
(72) Inventeur: Coutant, Régis, F-60117 Vauciennes (FR); Laigle, Jean, F-93700 Drancy (FR)
(74) Mandataire: CABINET BONNET-THIRION

(56) Documents cités:
- EP-A- 0 289 410
- DE-U- 8 713 513
- GB-A- 2 211 364

## Description

L'invention se rapporte à une boîte de montage pour appareil électrique; elle concerne plus particulièrement un perfectionnement permettant l'insertion de ladite boîte dans une goulotte de passage de conducteurs.

Le document de brevet EP-A-0289410 décrit un socle d'appareil électrique plus particulièrement conçu pour prendre place dans une goulotte de passage de conducteurs et constitué d'un ou plusieurs éléments modulaires à profil en U et de cloisons transversales d'extrémité. Ces différents éléments sont pourvus de crochets élastiques en matière plastique, permettant le montage et la fixation d'un tel socle dans une goulotte précitée, le verrouillage de chaque crochet étant assuré par une vis spécifique.

Par ailleurs, le document GB-A-2 211 364 décrit une boîte de montage qui n'est pas spécifiquement adaptée à être montée dans une goulotte de passage de conducteurs et comporte de ce fait des crochets très saillants susceptibles de pivoter vers l'intérieur de la boîte.

Les colonnettes de fixation de l'appareil électrique sont solidaires de ces crochets, ce qui peut être la cause de difficultés pour le montage de l'appareil électrique.

L'invention concerne plus particulièrement une nouvelle structure de boîte de montage destinée à recevoir au moins un appareil électrique et susceptible d'être elle-même montée dans une goulotte de passage de conducteurs.

Plus précisément, l'invention concerne donc une boîte de montage destinée à recevoir au moins un appareil électrique dans laquelle des crochets élastiques sont susceptibles de coopérer avec un rebord supérieur d'une telle goulotte, sont situés sur des parois latérales de ladite boîte près du bord d'ouverture de celle-ci et sont délimités par des découpes ou fentes de ces parois, caractérisée en ce que ladite boîte de montage étant susceptible d'être montée dans une goulotte de passage de conducteurs, le blocage desdits crochets est assuré par la mise en place de moyens de verrouillage constitués par une jupe latérale d'emboîtement d'une platine d'appareil électrique.

Selon un mode de réalisation préféré, le bord d'ouverture est muni d'une nervure externe et les crochets sont situés à une distance prédéterminée de cette nervure. La distance correspond à la hauteur d'une partie d'une goulotte précitée, notamment la partie de ladite goulotte destinée à recevoir un couvercle.

Les moyens de verrouillage des crochets peuvent avantageusement être constitués par la jupe latérale d'emboîtement d'une platine d'appareil électrique.

L'invention sera mieux comprise et d'autres avantages de celle-ci apparaîtront plus clairement à la lumière de la description qui va suivre de deux boîtes de montage conformes à son principe, donnée en référence aux dessins annexés dans lesquels:
- la figure 1 est une vue en perspective éclatée représentant une boîte de montage à entraxe variable conforme à l'invention, mise en place dans une goulotte de passage de conducteurs et dont les dimensions sont ajustées pour recevoir une platine d'appareil électrique en forme de cadre rectangulaire;
- la figure 2 est une vue schématique partielle en coupe transversale illustrant une possibilité de montage de la boîte dans la goulotte;
- la figure 3 est une vue de détail en coupe transversale, illustrant un des moyens de guidage longitudinal possibles des deux demi-boîtes;
- la figure 4 est une vue en perspective représentant une autre boîte de montage conforme à l'invention;
- la figure 5 est une vue de dessous de cette boîte; et
- la figure 6 est une vue en coupe de la boîte représentée sur la figure 4, représentée montée dans une autre goulotte de passage de conducteurs.

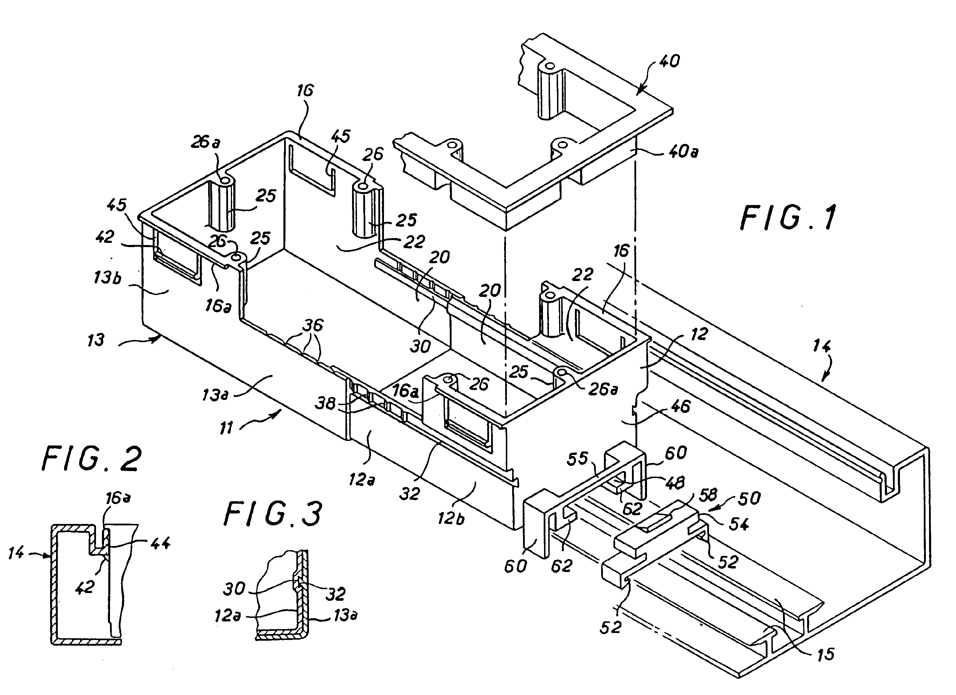

Sur les figures 1 à 3 on a représenté une boîte de montage 11, ici à entraxe variable, principalement constituée par l'assemblage de deux demi-boîtes en matière plastique moulée, semblables, mais de forme et dimensions légèrement différentes, comme on le verra plus loin. On distingue donc une première demi-boîte 12 et une seconde demi-boîte 13. Une telle boîte de montage, de dimension longitudinale ajustable pour recevoir un ou plusieurs appareils électriques, est plus particulièrement destinée à être montée dans une goulotte de passage de conducteurs 14. Cette dernière a un profil globalement en forme de U et peut être munie d'un double rail de fond 15 du modèle représenté ou autre. Elle est partiellement représentée sur la figure 1. La même goulotte est partiellement représentée en coupe transversale sur la figure 2.

Chaque demi-boîte 12 et 13 comporte une portion d'assemblage 12a, 13a et une partie de montage 12b, 13b, respectivement conformée pour recevoir une platine 40 d'appareil électrique. La partie de montage 12b ou 13b comporte, à sa partie supérieure, un bord d'ouverture 16 en forme de U, muni d'une nervure externe 16a. Pour chaque demi-boîte, les parois latérales longitudinales 20 de ladite portion d'assemblage sont plus basses que les parois latérales longitudinales 22 de la partie de montage voisine. Ladite partie de montage comporte intérieurement des moyens de fixation d'une platine 40 dimensionnée pour un ou plusieurs appareils électriques précités. Ces moyens de fixation sont ici constitués par des colonnettes 25 percées longitudinalement et venues de moulage avec les différentes parois latérales longitudinales et transversale de ladite partie de montage. Les trous 26 et 26a de ces colonnettes sont taraudés ou taraudables par des vis ou munis d'inserts. Les colonnettes sont accolées aux faces internes desdites parois latérales de la partie de montage.

Dans l'exemple plus spécifiquement décrit, les dimensions transversales externes d'une portion d'assemblage 12a de la première demi-boîte 12 sont sensiblement égales aux dimensions transversales internes d'une portion d'assemblage 13a de la seconde demi-boîte 13 et cette dernière au moins présente une face latérale transversale ouverte pour permettre un assemblage télescopique longitudinal desdites demi-boîtes. Par conséquent, il apparaît bien que l'entraxe des trous 26a des colonnettes 25 portées par les parois transversales opposées des demi-boîtes est variable et ajustable, comme d'ailleurs l'entraxe des trous 26 des autres colonnettes homologues symétriques, permettant l'adaptation de différents types d'appareils électriques.

En outre, les demi-boîtes sont pourvues de moyens coopérants de guidage longitudinal. Ces moyens de guidage sont ici constitués par des nervures 30 et glissières 32 en queue d'aronde, définies le long des parois latérales longitudinales, en contact mutuel, des deux demi-boîtes. Le guidage peut être réalisé par tout autre moyen de guidage longitudinal. Plus précisément, dans le cas représenté, les nervures 30 sont venues de moulage sur les faces internes des parois latérales longitudinales de la demi-boîte 13 tandis que les glissières 32 sont conformées dans les parois latérales longitudinales de la demi-boîte 12 et s'ouvrent sur les faces externes de ces parois. Elles s'étendent sur toute la longueur de la demi-boîte 12. La coopération de ces moyens de guidage est illustrée par la figure 3. De plus, au moins deux parois longitudinales en contact mutuel desdites demi-boîtes, sont respectivement pourvues d'une rangée d'encoches 36 et d'une rangée de dents 38 correspondantes, coopérant afin d'ajuster rapidement et de maintenir en place les deux demi-boîtes à une distance souhaitée correspondant à un entraxe d'appareil électrique choisi. Dans l'exemple représenté, la demi-boîte 12 comporte deux rangées d'encoches 38 sur les faces externes de ses parois latérales longitudinales tandis que la demi-boîte 13 comporte deux rangées d'encoches 36 correspondantes sur les faces internes de ses parois latérales longitudinales.

La partie de montage 12b de la première demi-boîte 12 est élargie transversalement à sa partie supérieure à partir d'un niveau situé au-dessus des rainures 32, de façon que son bord supérieur 16 en forme de U ait les mêmes dimensions que celles du bord supérieur de la partie de montage 13b de ladite seconde demi-boîte 13. Cette configuration particulière de la demi-boîte 12 permet d'accueillir une platine d'appareil électrique 40 de forme générale rectangulaire.

Il est à noter que les termes "inférieur" ou "supérieur" employés tout au long de la description ne sauraient faire référence à une quelconque position d'utilisation de la boîte de montage. Ils indiquent simplement la position de tel ou tel élément par rapport à un autre en supposant la paroi de fond de chaque boîte ou demi-boîte placée dans un plan horizontal.

Les deux demi-boîtes 12 et 13 sont pourvues de différents moyens permettant de les assujettir à une goulotte 14 ou structure analogue.

Ainsi, selon une caractéristique de l'invention, chaque paroi latérale longitudinale de chaque demi-boîte comporte un crochet élastique 42, allongé, susceptible de coopérer avec un rebord supérieur 44 d'une goulotte de passage de conducteurs. Ces crochets sont prévus près des bords supérieurs 16 desdites demi-boîtes et plus particulièrement en regard et à distance constante des nervures 16a. Ils sont délimités par des découpes pratiquées dans les parois des demi-boîtes, lesquelles découpes leur donnent l'élasticité voulue. Dans l'exemple décrit, une telle découpe 45 est une lumière en forme de U. Le crochet 42, en forme de nervure rectiligne dirigée vers l'extérieur, est situé près de la base du U. Le montage est celui de la figure 2 où il apparaît clairement que la distance séparant le crochet 42 du rebord 16a correspond à l'épaisseur du rebord 44 de la goulotte, normalement conformé pour la fixation du couvercle de celle-ci. La fixation de la boîte de montage, une fois réglée à la longueur voulue, se fait donc par simple emboîtement à force dans la goulotte, actionnant automatiquement les crochets 42. De plus, il est à noter que, du fait que l'élasticité des crochets est donnée par des découpes définies dans les parois latérales mêmes, ces crochets, une fois en prise comme représenté à la figure 2, sont bloqués par la mise en place de moyens de verrouillage fixés à la boîte, comme par exemple la platine 40, avantageusement munie d'une jupe latérale d'emboîtement 40a. Après mise en place de la platine, par vissage de celle-ci dans les colonnettes 25, ladite jupe empêche tout retrait des crochets vers l'intérieur, ce qui rend impossible un arrachement accidentel de la boîte.

En outre, pour un autre type de fixation à une goulotte munie d'un rail de fond 15 tel que représenté à la figure 1, la paroi latérale transversale 46 de chaque demi-boîte 12, 13 comporte, à sa partie inférieure, un logement de verrouillage 48, ouvert, localisé pour être positionné après montage, au voisinage dudit rail de fond 15, plus précisément au-dessus de celui-ci. Par ailleurs, pour chaque demi-boîte, un coulisseau 50, indépendant, présente des moyens d'accrochage audit rail sous forme de deux crochets 52 en regard l'un de l'autre et conformés pour coopérer avec les bords longitudinaux extérieurs du rail double 15. Le coulisseau 50 peut ainsi facilement être assujetti audit rail. Il comporte en outre un tenon transversal 54 de forme et dimensions correspondant à l'ouverture du logement de verrouillage 48. Dans l'exemple représenté, la partie supérieure de l'ouverture du logement de verrouillage est délimitée par un simple élément flexible 55 en forme de barrette tandis que le coulisseau 50 comporte, à sa partie supérieure, une dent 58 formant rampe. L'agencement est tel que la dent 58 puisse venir s'encastrer dans le logement de verrouillage 48 après forçage de l'élément flexible 55. D'autre part, chaque demi-boîte comporte des pattes latérales 60 situées de part et d'autre du logement de verrouillage 48 et contre lesquelles viennent s'appliquer, en position de montage, les faces externes des crochets 52 dudit coulisseau. Comme cela ressort clairement de la figure 1, le logement de verrouillage 48 est conformé pour accueillir le tenon transversal 54 qui vient se loger entre l'élément flexible 55 et deux nervures 62 à profil en L, se faisant face en-dessous et de part et d'autre de l'élément flexible 54. Ces nervures viennent prendre appui sous le tenon transversal 55, au montage. Lorsque le coulisseau 50, qui vient d'être décrit, est engagé et dûment verrouillé dans le logement ouvert 48, les efforts de traction sur les appareils électriques portés par la boîte sont repris au niveau du tenon 54 et des nervures 62. Les crochets 52 sont efficacement bloqués et ne peuvent basculer vers l'extérieur, grâce à la présence des pattes latérales 60.

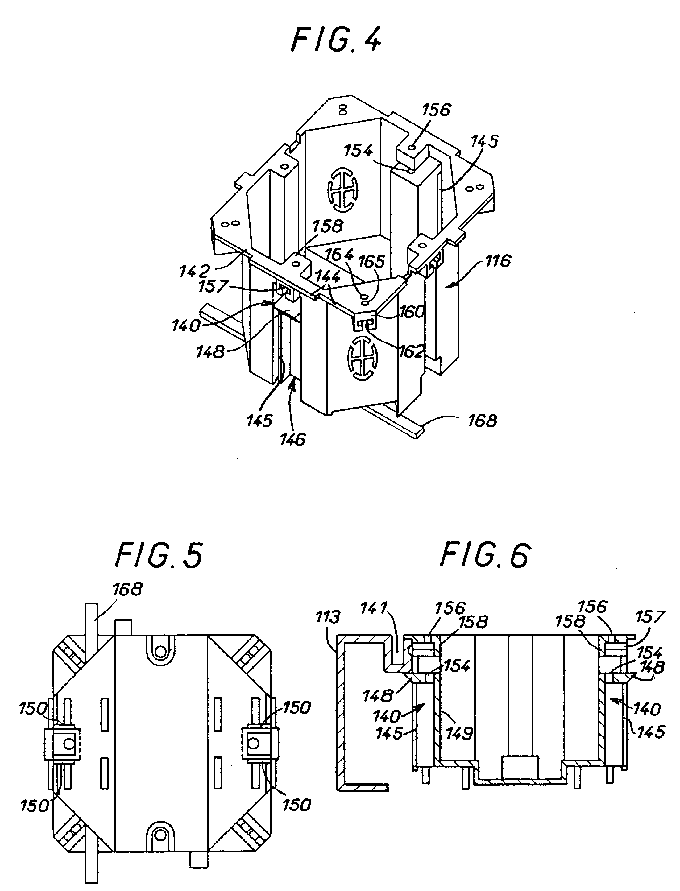

Sur les figures 4 à 6, on a représenté un autre type de boîte de montage conforme à l'invention, pour un seul appareil électrique modulaire tel qu'une prise de courant ou un interrupteur, par exemple.

Cette boîte 116 comporte deux crochets élastiques opposés 140 susceptibles de coopérer avec la face interne d'un rebord supérieur 141 d'une goulotte de passage de conducteurs 113 (figure 6). Ce rebord est plus spécifiquement conformé pour accueillir le couvercle de la goulotte. Les crochets s'étendent jusqu'au voisinage du bord d'ouverture 142 du corps de boîte. Celui-ci est muni d'une nervure externe 144 saillante, avec laquelle les crochets 140 coopèrent pour enserrer ledit rebord supérieur. Chaque crochet est délimité par des fentes 145 pratiquées dans la paroi latérale du corps de boîte sur une grande partie de sa hauteur, entre une partie saillante 148 du crochet et la paroi de fond du corps de boîte. Par ailleurs, ladite partie saillante 148, qui est mobile par rapport à la paroi du corps de boîte et non rattachée à celui-ci, se trouve définie à la partie supérieure d'un renfoncement 146, à profil en U, de la paroi latérale. Les faces latérales de ce renfoncement, séparées du reste du corps de boîte par les fentes 145, font partie du crochet. De plus, deux autres petites fentes parallèles 150 (voir figure 5) séparent les deux parois parallèles du renfoncement de la base du corps de boîte. Le crochet n'est donc en définitive rattaché au corps de boîte que par le bord inférieur de la paroi verticale la plus interne 149 dudit renfoncement 146. Cet agencement donne au crochet une certaine élasticité permettant la mise en place du corps de boîte dans la goulotte par simple effet de "clipsage". Avantageusement, chaque partie saillante 148 comporte une extrémité en biseau, facilitant la mise en place. De plus, elle est munie d'un trou 154 situé dans le prolongement d'un autre trou 156 défini dans un bossage 158 venu de moulage avec la paroi du corps de boîte au voisinage de la nervure 144. Ainsi, le crochet peut être immobilisé après sa mise en place dans la goulotte par une vis (non représentée) que l'on engage dans les deux trous alignés 154, 156. Pour ce faire, le trou 156 peut être taraudé ou taraudable par la vis elle-même mais il est aussi possible d'insérer un écrou dans un évidement 157 défini dans le bossage, sous le trou 156.

Le corps de boîte comporte d'autres particularités remarquables. En particulier, il présente, en coupe "horizontale", un contour globalement octogonal mais la nervure 144 déborde aux angles par rapport au corps de boîte de façon à présenter un périmètre approximativement carré ou rectangulaire. Les trous de fixation pour l'appareil électrique sont ménagés sur les parties les plus saillantes de la nervure 144, aux angles du corps de boîte ou au milieu de chaque côté. Elles sont renforcées par des bossages inférieurs 160 venus de moulage et dans lesquels sont pratiquées des cavités 162 s'étendant en diagonale et susceptibles d'accueillir des écrous ou inserts. Plusieurs trous de fixation 164, 165 débouchent dans chaque cavité 162 de façon à définir plusieurs entraxes de fixation d'appareil électrique. Les trous 164 et 165 peuvent par ailleurs être taraudés ou taraudables par vis.

En outre, le fond du corps de boîte est muni de pattes de positionnement 168 de longueurs prédéterminées, susceptibles de venir en butée avec des corps de boîte voisins pour un positionnement correct des corps de boîte les uns par rapport aux autres. La mise côte-à-côte de deux ou plusieurs boîtes permet plusieurs entraxes d'appareillages suivant que les boîtes ont leurs pattes bout à bout ou en position alternée, c'est-à-dire les pattes d'une boîte contre la paroi de la boîte voisine.

## Revendications

1. Boîte de montage destinée à recevoir au moins un appareil électrique, dans laquelle des crochets élastiques (42, 140) susceptibles de coopérer avec un rebord supérieur (44, 141) d'une telle goulotte, sont situés sur des parois latérales de ladite boîte près du bord d'ouverture (16 ou 144) de celle-ci et sont délimités par des découpes ou fentes (45, 145, 150) de ces parois, caractérisée en ce que ladite boîte de montage étant susceptible d'être montée dans une goulotte de passage de conducteurs, le blocage desdits crochets est assuré par la mise en place de moyens de verrouillage constitués par une jupe latérale d'emboîtement (40a) d'une platine d'appareil électrique.

2. Boîte de montage selon la revendication 1, caractérisée en ce que ledit bord d'ouverture étant muni d'une nervure externe (16a), lesdits crochets (42) sont situés à une distance prédéterminée de cette nervure, cette distance correspondant à une dimension d'une partie d'une goulotte précitée.

3. Boîte de montage selon la revendication 1, caractérisée en ce que lesdites découpes (45) sont des lumières en forme de U.

4. Boîte de montage selon l'une des revendications précédentes, caractérisée en ce qu'elle est constituée de deux demi-boîtes (12, 13) semblables, en ce que les dimensions transversales externes d'une portion d'extrémité (12a) d'une première demi-boîte (12) sont sensiblement égales aux dimensions transversales internes d'une portion d'extrémité (13a) d'une seconde demi-boîte, en ce que cette dernière au moins présente une face latérale transversale ouverte pour permettre un assemblage télescopique longitudinal desdites demi-boîtes et en ce que chaque demi-boîte porte deux crochets élastiques (42) précités définis respectivement sur chacune de ses parois latérales longitudinales.

## Patentansprüche

1. Montagegehäuse, das zur Aufnahme mindestens eines elektrischen Geräts bestimmt ist und in dem elastische Haken (42, 140), die mit einem oberen Bord (44, 141) einer solchen Rinne zusammenwirken können, an Seitenwänden dieses Gehäuses in Nähe seines Öffnungsrandes (16 oder 144) angeordnet sind und durch Einschnitte oder Schlitze (45, 145, 150) dieser Wände abgegrenzt sind, dadurch gekennzeichnet, daß, wenn dieses Montagegehäuse in einer Rinne zur Durchführung von Leitern montiert werden kann, die Blockierung dieser Haken durch die Anordnung von Verriegelungsmitteln gewährleistet ist, die aus einer seitlichen Aufsteckschürze (40a) einer Platine eines elektrischen Geräts bestehen.

2. Montagegehäuse nach Anspruch 1, dadurch gekennzeichnet, daß die Haken (42), wenn dieser Öffnungsrand mit einer Außenrippe (16a) versehen ist, in einem vorbestimmten Abstand zu dieser Rippe angeordnet sind, wobei dieser Abstand einer Abmessung eines Teils einer besagten Rinne entspricht.

3. Montagegehäuse nach Anspruch 1, dadurch gekennzeichnet, daß diese Einschnitte (45) U-förmige Langlöcher sind.

4. Montagegehäuse nach einem der vorhergehenden Ansprüche, dadurch gekennzeichnet, daß es durch zwei gleichartige Halbkästen (12, 13) gebildet ist, daß die Außenabmessungen eines Endteils (12a) eines ersten Halbgehäuses (12) in Querrichtung im wesentlichen gleich den Innenabmessungen eines Endteils (13a) eines zweiten Halbgehäuses in Querrichtung sind, daß letzteres zumindest eine offene Querseitenfläche für eine mögliche teleskopische Verbindung besagter Halbgehäuse in Längsrichtung aufweist und daß jedes Halbgehäuse zwei elastische Haken (42) aufweist, die jeweils auf einer seiner Längsseitenwände definiert sind.

## Claims

1. A mounting box which is intended to receive at least one item of electrical equipment, in which resilient latches (42, 140) capable of co-operating with an upper rim (44, 141) of such a channel are disposed on lateral walls of said box close to the edge (16 or 144) of the opening of the box and are defined by cut-outs or slots (45, 145, 150) in said walls, characterised in that said mounting box being capable of being mounted in a channel for carrying conductors, blocking of said latches is effected by setting in position locking means formed by a lateral engagement skirt (40a) of a plate member of an item of electrical equipment.

2. A mounting box according to claiml characterised in that said edge of the opening being provided with an external rib (16a), said latches (42) are disposed at a predetermined distance from said rib, said distance corresponding to a dimension of a part of a said channel.

3. A mounting box according to claim 1 characterised in that said cut-outs (45) are openings of U-shape.

4. A mounting box according to one of the preceding claims characterised in that it is formed by two similar box halves (12, 13), that the external transverse dimensions of an end portion (12a) of a first box half (12) are substantially equal to the internal transverse dimensions of an end portion (13a) of a second box half, that the latter at least has an open transverse lateral face to permit longitudinal telescopic assembly of said box halves, and that each box half carries two said resilient latches (42) which are respectively defined on each of its longitudinal lateral walls.
